# EUROPÄISCHE PATENTSCHRIFT

(11) **EP 0 965 163 B1**
(45) Veröffentlichungstag und Bekanntmachung des Hinweises auf die Patenterteilung: **20.06.2001**
(21) Anmeldenummer: 98909477.6
(22) Anmeldetag: 25.02.1998
(51) Int. Cl.: H02K 16/02

(54) **ELEKTRONISCH KOMMUTIERTER GLEICHSTROMMOTOR**
ELECTRONICALLY SWITCHED D.C. MOTOR
MOTEUR A COURANT CONTINU A COMMUTATION ELECTRONIQUE

(30) Priorität: 04.03.1997 DE 29703862 U
(43) Veröffentlichungstag der Anmeldung: 22.12.1999
(73) Patentinhaber: Papst-Motoren GmbH & Co. KG, 78112 St. Georgen (DE)
(72) Erfinder: SCHMIDER, Fritz, D-78132 Hornberg (DE)
(86) Internationale Anmeldenummer: EP9801058
(87) Internationale Veröffentlichungsnummer: WO9839836

(56) Entgegenhaltungen:
- EP-A- 0 814 269
- WO-A-97/47068
- US-A- 5 245 238
- PATENT ABSTRACTS OF JAPAN vol. 009, no. 027 (E-294), 6.Februar 1985 & JP 59 172961 A (MATSUSHITA DENKI SANGYO KK), 29.September 1984,

## Beschreibung

Die Erfindung betrifft einen elektronisch kommutierten Gleichstrommotor mit einem Luftspalt, mit einem auf der einen Seite dieses Luftspalts angeordneten ersten permanentmagnetischen Rotor und mit einem auf der gegenüberliegenden Seite des Luftspalts angeordneten zweiten permanentmagnetischen Rotor, der gleichachsig zum ersten Rotor angeordnet ist.

Aus der DE-A1, 195 03 521 ist ein elektronisch kommutierter Antriebsmotor mit ebenem Luftspalt und mit einem auf dem Rotor befestigten Lüfterrad bekannt. Solche Motoren sind wegen ihres einfachen Aufbaus recht preisgünstig und werden deshalb u.a. auch in Kraftfahrzeugen im Innenraum eingebaut. Dort darf ein bestimmter Geräuschpegel nicht überschritten werden. Deshalb ist es wichtig, daß der Rotor des Gebläses durch die auftretenden Fahrbeschleunigungen nicht in Schwingung gerät, sondern fest in seinem Spurlager gehalten wird. Die dafür notwendige Axialkraft wird hier über die magnetische Kopplung zwischen Rotormagnet und einer im Stator liegenden Stahlscheibe hergestellt. Nachteilig ist, daß dabei Wirbelströme auftreten, die den Wirkungsgrad des Motors verschlechtern und indirekt wiederum eine Laufgeräuscherhöhung bewirken. Ein weiterer Nachteil derart aufgebauter Scheibenläufermotoren ist, daß generell große elektromagnetisch verursachte axiale Wechselkräfte vorhanden sind, die das ganze System in Schwingung versetzen können.

Aus der JP-A-59/172 961 ist ein Doppelmotor bekannt. Dieser enthält zwei Induktionsmotoren, die beide einen ebenen Luftspalt haben, den man auch als axialen Luftspalt bezeichnet. Zwischen den beiden Rotoren dieser Motoren, die unabhängig voneinander drehbar sind, befindet sich ein Doppelstator mit einer ersten Wicklung für den ersten Motor und einer zweiten Wicklung für den zweiten Motor. In der Mitte des Doppelstators befindet sich ein Lagertragrohr, und dort befindet sich ein erstes Kugellager zur Lagerung des ersten Rotors und ein zweites Kugellager zur Lagerung des zweiten Rotors.

Aus der US-A-5 245 238 kennt man einen Generator mit ebenem Luftspalt. Dieser hat zwei permanentmagnetische Rotoren, die von einer gemeinsamen Welle angetrieben werden, und zwischen diesen Rotoren befindet sich ein Stator mit einer Wicklung, in der bei Drehung des Rotors eine Spannung induziert wird. Zum Einstellen dieser Spannung sind die beiden Rotoren relativ zueinander innerhalb vorgegebener Grenzen verdrehbar. Zur Verdrehung sind eine Torsionsfeder und eine Wirbelstrombremse vorgesehen. Beide Rotoren werden von derselben Welle angetrieben und sind dadurch gegeneinander abgestützt.

Der Erfindung liegt die Aufgabe zugrunde, mit vertretbarem Aufwand einen noch geräuschärmeren Elektromotor bereitzustellen.

Diese Aufgabe wird erfindungsgemäß gelöst durch den Gegenstand des Patentanspruchs 1. Besonders vorteilhafte Ausführungsformen der Erfindung sind in den Unteransprüchen beschrieben.
Es zeigen:
- Fig. 1: ein erstes Ausführungsbeispiel eines erfindungsgemäßen Gleichstrommotors, im Schnitt,
- Fig. 2: ein zweites Ausführungsbeispiel mit einer Gehäusevariante,
- Fig. 3: ein drittes Ausführungsbeispiel, und
- Fig. 4: ein viertes Ausführungsbeispiel der Erfindung.

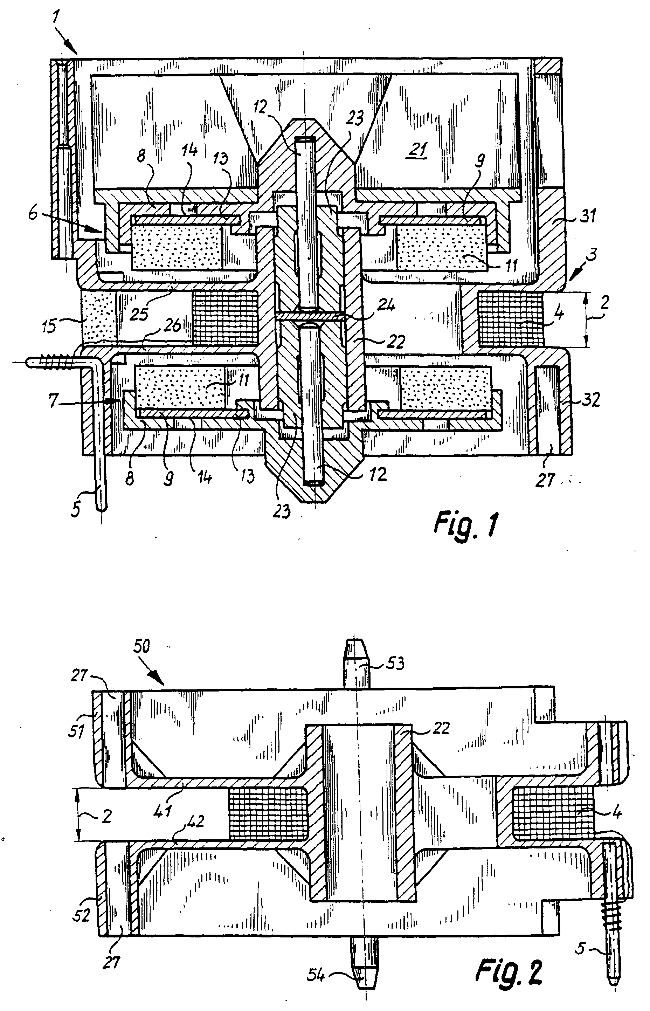

Fig. 1 zeigt einen erfindungsgemäßen Gleichstrommotor, der in einem Gehäuse 1 angeordnet ist. Ein mit dem Gehäuse 1 verbundener Statorträger 3 enthält ein Lagertragrohr 22. Der Statorträger 3 erstreckt sich durch den als Doppelpfeil dargestellten Luftspalt 2 des Motors und bildet im wesentlichen parallele Wände 25, 26, zwischen denen eine Statorwicklung 4 angeordnet ist. Auf der einen Seite des Luftspalts 2 ist ein erster permanetmagnetischer Rotor 6 und auf der gegenüberliegenden Seite des Luftspalts 2 ein zweiter permanentmagnetischer Rotor 7 angeordnet, der gleichachsig zum ersten Rotor 6 montiert ist, aber keine mechanische Verbindung zum ersten Rotor 6 aufweist. In diesem Ausführungsbeispiel dient nur der erste Rotor 6 zum Antrieb einer Last, beispielweise ein am Rotor befestigtes Lüfterrad 21. Je nach Bedarf kann auch der hier frei mitlaufende zweite Rotor zum Antieb einer weiteren Last benutzt werden. Das Lüfterrad 21 wird von einer ersten Wandung 31 des Gehäuses 1 umgeben und ist im Bereich des Lüfterrades 21 zur Luftführung für dieses Lüfterrad ausgebildet. Eine zweite Wandung 32 umgibt die Peripherie des zweiten Rotors 7. Die beiden Rotoren 6, 7, sind mechanisch im wesentlichen identisch ausgebildet und ihre Permanentmagnete 11 im wesentlichen identisch magnetisiert. In dem Lagertragrohr 22 ist je eine Radiallageranordnung 23 zur radialen Lagerung der Wellen 12 der beiden Rotoren 6, 7 vorgesehen. Zwischen den beiden Radiallagern 23 ist ein Axiallagerelement 24, vorzugsweise eine Kunststoffscheibe angeordnet, gegen das der eine Rotor mit dem freien Ende seiner Welle 12 von einer Seite und der andere Rotor 7 mit dem freien Ende seiner Welle 12 von der anderen Seite anliegt. Dabei werden die Rotoren 6, 7 durch ihre wechselseitige magnetische Anziehung gegen dieses Axiallagerelement 24 gezogen.

Zwischen den Wänden 25, 26 ist ein stationärer axial polarisierter Positionsmagnet 15 angeordnet, der im Zusammenwirken mit den Permanentmagneten 11 der Rotoren 6, 7 die Stellung dieser beiden Rotoren im stromlosen Zustand beeinflußt (z. B. Startstellung).
Die Rotoren 6, 7 bestehen aus einem Kunststoffteil 8, das als Träger für die ringförmigen, axial magnetisierten Rotormagneten 11 dient. In diesem Teil 8 ist ein Ende der Welle 12 des Rotors befestigt und ein durch Clipsen befestigtes weichmagnetisches Rückschlußteil 9 angeordnet, auf dem der ringförmige Rotormagnet 11 befestigt ist, z. B. durch Kleben. Das als Ringscheibe ausgebildete Rückschlußteil 9 wird über dessen inneren Rand in eine entsprechende radiale Ringnut 13 des Kunststoffteils 8, welches vorzugsweise als Spritzgußteil hergestellt ist, eingeclipst. Das Rückschlußteil 9 liegt auf einer Bodenfläche 14 des Kunststoffteils 8 auf.

In Fig. 2 ist ein weiteres Ausführungsbeispiel, insbesondere eines weiteren Beispiels eines Gehäuses 50 des erfindungsgemäßen Motors dargestellt. Der übrige Aufbau des Motors (Rotor und Stator) entspricht dem des Motors gemäß Fig. 1 und wurde deshalb nicht nochmals eingezeichnet. Dieses Gehäuse 50 weist zwei im wesentlichen gleiche napfförmige Gehäuseteile 51, 52 auf, die sich in entgegengesetzten Richtungen öffnen und mit ihren Bodenabschnitten 41, 42 unter Bildung eines zur Aufnahme der Statorwicklung 4 (Flachwicklung) ausgebildeten Spalts, der den Luftspalt 2 für den Motor bildet, einander gegenüberliegen, Das Gehäuse 50 ist universell montierbar.

Die Gehäuseteile 51, 52 sind durch das Lagertragrohr 22 miteinander verbunden. Der äußere Teil des Lagertragrohrs 22 ist in seinem sich durch den Luftspalt 2 erstreckenden Abschnitt als Teil eines Spulenformers für die Flachwicklung 4 ausgebildet.

Die Radiallageranordnungen 23 (nicht dargestellt) können wie im Ausführungsbeispiel gemäß Fig. 1 als Sinterlager ausgebildet und durch Einpressen im Lagertragrohr 22 befestigt sein. Das zwischen den eingepreßten Sinterlagern 23 angebrachte Axiallager 24 (nicht dargestellt) wirkt wie im Ausführungsbeispiel gemäß Fig. 1 sowohl in Richtung zum einen wie zum entgegengesetzten Sinterlager 23 als Axiallager.

Die Flachwicklung 4 hat eine von der Kreisform abweichende Form und ist zweisträngig, insbesondere bifilar, ausgebildet.

Der fertig montierte Motor kann mittels Schrauben, die in die Befestigungsbohrungen 27 eingedreht werden, an einer Wand oder auf einer Leiterplatte montiert werden. Zur Montageerleichterung dienen Kodierstifte 53, 54, die in entsprechende Löcher gesteckt werden und so den zu befestigenden Motor fixieren.

In die Spritzform für das Gehäuse 1, 50 können vorteilhafterweise Kontaktstifte 5 eingelegt und umspritzt werden. Vor dem Einlegen in die Form werden die Enden der Wicklung 4 mit den Kontaktstiften 5 mittels Löten verbunden.

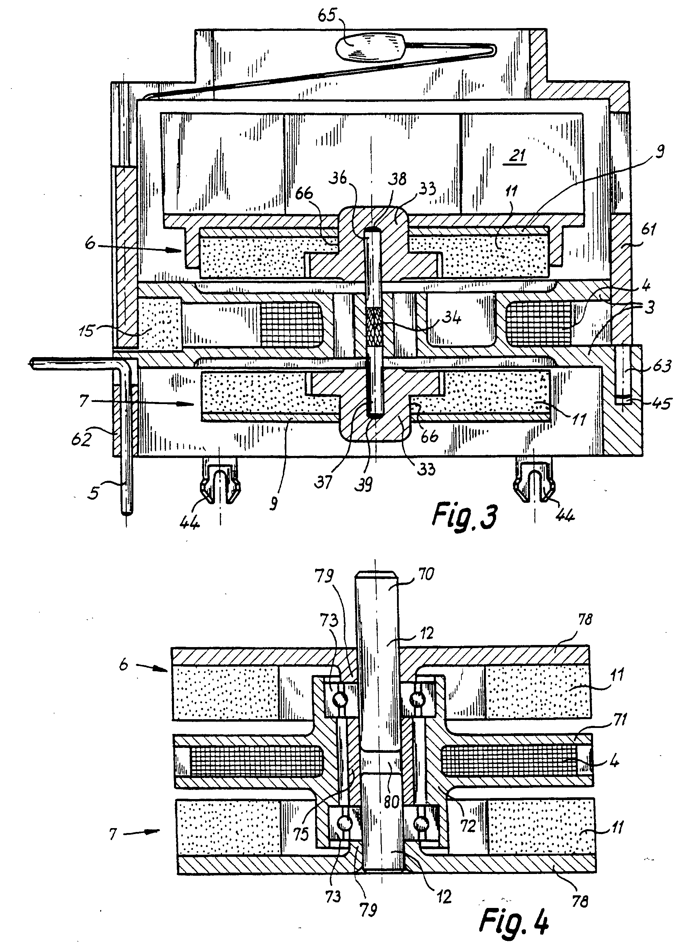

Fig. 3 zeigt ein vereinfachtes Ausführungsbeispiel im Vergleich zur Ausführung gemäß Fig. 1. Die Teile des Stators und Rotors sind im wesentlichen gleich und deshalb mit den gleichen Bezugszeichen versehen. Die beiden Rotoren 6, 7 weisen Rückschlußscheiben 9 auf, die auf den Magneten 11 aufliegen.

Auf dem oberen Rotor 6 ist beispielsweise direkt ein Lüfterrad 21 aufgebracht, das beispielsweise mittels Preßsitz drehfest mit dem Rotor 6 verbunden ist. Zur Lagerung der Rotoren 6, 7 ist jeweils eine Lagerbuchse 33 mit einem nabenartigen Ansatz 66 zentral im Rotor angeordnet. Eine Achse 34 ist im Statorträger 3 befestigt. Die Durchmesser der Bohrungen in den Lagerbuchsen 33 sind so ausgeführt, daß sie einen leichten Lauf der aufgesteckten Rotoren 6, 7 auf den Achsenendbereichen 36, 37 der Achse 34 ermöglichen. Durch die auch in Fig. 1 und 2 beschriebenen wechselseitige Anziehung der beiden Rotormagnete 11 werden bei dieser Ausführung die Kuppen 38, 39 der Achsenden gegen die Bodenflächen der Bohrungen der Lagerbuchsen 33 gezogen. Die Rotoren 6 und 7 bestehen auch bei diesem Ausführungsbeispiel aus identischen Teilen: gespritzter Magnet 11, gespritzte Lagerbuchse 33 aus gleitfähigem Kunststoff und gestanzte Rückschlußscheibe 9. Auf den Rotor 6 wird lediglich noch das Laufrad 21 aus Kunststoff aufgeklebt oder aufgeschnappt. Die beiden gegenüberliegenden Rotoren 6, 7 sind in diesem Ausführungsbeispiel 4-polig magnetisiert. Die Magnete 11 ziehen sich gegenseitig an, so daß sich eine axiale magnetische Verspannung ohne Lagerspiel ergibt. Die axiale Abstützung erfolgt an den Kuppen 38, 39 der Achse 34. Die Magnete 11 und die Rückschlußscheiben 9 werden ebenfalls durch Magnetkraft gehalten, so daß aufwendige Befestigungarbeitsgänge entfallen. Die Lagerbuchsen aus speziellem Kunststoff eignen sich für Trockenlauf, d. h. es kann auch auf Schmiermittel verzichtet werden.

Die elektromagnetischen Anregungen beider Rotoren 6, 7 sowie die Reaktionskräfte der Positionssignale auf den Stator kompensieren sich durch die erfindungsgemäße Anordnung. Die Körperschallübertragung auf das Gesamtsystem wird dadurch deutlich reduziert und die Eisenverluste werden beseitigt.

Der sehr einfache Aufbau und die Gleichteile erbringen eine wesentliche Preisreduzierung.

Der Statorträger 3 ist Halter für die Wicklung 4 und Träger für den oder die Positionsmagnete 15 und weist Schnapphaken 44 , vorzugsweise angespritzt, für die Befestigung auf einer vorhandenen Leiterplatte (kundenseitig) und Aufnahmebohrungen 45 für das Motorgehäuse 61 auf. Über Führungen (z. B. Schwalbenschwanzführungen) an der Außenkontur des Trägers 3 wird von der oberen oder unteren Seite her ein Kontaktträger 62 mit Kontaktstiften 5 eingeschoben. Er wird für das automatisch ablaufende Bewickeln des Stators benötigt zur Kontaktierung an der Leiterplatte (kundenseitig). Das Motorgehäuse wird über Stifte 63 auf den Träger 3 aufgesteckt und kann beispielsweise einen Temperaturfühler 65 enthalten.

Fig. 4 zeigt ein Ausführungsbeispiel dieser Erfindung mit Wälzlagerung. Die Tragscheiben 78, an denen die Magnete 11 der Rotoren 6, 7 befestigt sind, sind als gestanzte Blechscheiben ausgeführt und bilden gleichzeitig den magnetischen Rückschluß. Ein Statorträger 71 ist Halter für die Wicklung 4, für die nicht gezeigten Positionsmagnete, und dient auch zur Befestigung des Motors. Die Tragscheiben 78 enthalten eine durch Ausstanzen und Tiefziehen eingebrachte Zentralbohrung und einen kragenförmigen Ansatz 79. Am Statorträger ist im wesentlichen zentral ein Lägertragrohr 72 angespritzt, das an seinen axialen Endbereichen Lager 73 aufnimmt. Diese Lager 73, vorzugsweise Kugellager, dienen als Lagerung für die beiden Rotorwellen 12, die jeweils mit den Tragscheiben 78 der Rotoren 6, 7 drehfest verbunden sind.

Durch die wechselseitige magnetische Anziehung der beiden Rotormagnete 11 werden die Ansätze 79 der Tragscheiben 78 in axialer Richtung gegen die Innenringe der Lager 73 gezogen, womit auch das Lagerspiel beseitigt und dadurch das Lagergeräusch vermindert wird.

Zwischen den Wellenenden der Wellen 12 ist ein Zwischenraum 80. Die Wellenenden sind mit leichtem. Schlebesitz in die Abstandsbuchse 75 eingeführt. die Buchse 75 dient nicht zur Mitnahmeverbindung der beiden Wellenenden, sondern lediglich zur Einhaltung des axialen Abstands der Lager 73 und der Führung der Wellen 12. Die Welle 12 des oberen Rotors 6 weist eine axiale Verlängerung 70 auf zur Aufnahme einer Last, beispielsweise eines Lüfterrades 21. Die Anschlüsse der Wicklungsenden können in der oben beschriebenen Weise erfolgen.

Außen-und Innendurchmesser der Lager 73 sind mit leichtem Schiebesitz montiert, d. h. eine hochgenaue teure Passung entfällt. Lediglich die Tragscheiben 78 müssen fest mit den Wellen 12 verbunden sein.

Die Erfindung ist nicht auf die dargestellten und beschriebenen Ausführungsbeispiele beschränkt.

Der Gegenstand, für den Schutz begehrt wird, ist in den Ansprüchen definiert.

## Patentansprüche

1. Elektronisch kommutierter Gleichstrommotor mit einem Luftspalt (2),
mit einem auf der einen Seite dieses Luftspalts (2) angeordneten ersten permanentmagnetischen Rotor (6), dem eine erste Lageranordnung (23, 24; 73) zugeordnet ist,
mit einem auf der gegenüberliegenden Seite des Luftspalts (2) angeordneten zweiten permanentmagnetischen Rotor (7), der gleichachsig zum ersten Rotor (6) angeordnet ist, aber keine mechanische Verbindung zum ersten Rotor (6) aufweist und dem eine zweite Lageranordnung (23, 24; 73) zugeordnet ist,
und mit einer in dem Luftspalt (2) angeordneten Statorwicklung (4), welche für beide Rotoren (6, 7) gemeinsam ist und zum Antrieb beider Rotoren (6, 7) dient, wobei durch den magnetischen Zug zwischen den Permanentmagneten der beiden Rotoren (6, 7) eine axiale Vorspannkraft auf die beiden Lageranordnungen erzeugt wird.

2. Motor nach Anspruch 1, bei dem einer der beiden Rotoren (6, 7) zum Antrieb einer Last ausgebildet ist.

3. Motor nach Anspruch 2, bei dem die beiden Rotoren (6, 7) mechanisch im wesentlichen identisch ausgebildet sind.

4. Motor nach einem oder mehreren der Ansprüche 1 bis 3, bei dem die Permanentmagnete (11) der beiden Rotoren (6, 7) im wesentlichen identisch magnetisiert sind.

5. Motor nach einem oder mehreren der vorhergehenden Ansprüche, bei dem ein Gehäuse (1, 50) mit einem Lagertragrohr (22) vorgesehen ist, in dem für die radiale Lagerung der Wellen (12) der beiden Rotoren (6, 7) je eine Radiallageranordnung (23) vorgesehen ist.

6. Motor nach Anspruch 5, bei dem zwischen den Radiallageranordnungen (23) ein Axiallagerelement (24) angeordnet ist, gegen das der eine Rotor (6) mit dem freien Ende seiner Welle (12) von einer Seite und der andere Rotor (7) mit dem freien Ende seiner Welle (12) von der anderen Seite anliegt, wobei die Rotoren (6, 7) durch ihre wechselseitige magnetische Anziehung gegen dieses Axiallagerelement (24) gezogen werden.

7. Motor nach Anspruch 5 oder 6, bei dem das Lagertragrohr (22) an einem Statorträger (3) vorgesehen ist, der sich durch den Luftspalt (2) des Motors erstreckt und dort zwei zum Luftspalt (2) im wesentlichen parallele Wände (25, 26) bildet, zwischen denen die Statorwicklung (4) angeordnet ist.

8. Motor nach Anspruch 7, bei dem zwischen den zum Luftspalt (2) im wesentlichen parallelen Wänden (25, 26) mindestens ein stationärer Positionsmagnet (15) angeordnet ist, der im Zusammenwirken mit den Permanentmagneten (11) der beiden Rotoren (6, 7) die Stellung dieser beiden Rotoren im stromlosen Zustand beeinflußt.

9. Motor nach Anspruch 8 , bei dem der Positionsmagnet (15) in axialer Richtung polarisiert ist.

10. Motor nach einem oder mehreren der vorhergehenden Ansprüche , bei dem ein Gehäuse (1) vorgesehen ist, das ein Lagertragrohr (22) für beide Rotoren (6, 7) und äußere Wandungen (31, 32) aufweist, von denen die eine Wandung (31) die Peripherie des ersten Rotors (6) und die andere Wandung (32) die Peripherie des zweiten Rotors (7) umgibt.

11. Motor nach Anspruch 10, bei dem die Wandung (31), die den ein Lüfterrad (21) tragenden Rotor (6) umgibt, im Bereich des Lüfterrads (21) zur Luftführung für dieses Lüfterrad (21) ausgebildet ist.

12. Elektronisch kommutierter Gleichstrommotor nach einem oder mehreren der Ansprüche 1 bis 11 mit einer flachen Statorwicklung (4) und
mit mindestens einem dieser zugeordneten permanentmagnetischen Rotor (6), der als Träger für den ringförmigen, axial magnetisierten Rotormagneten (11) ein Kunststoffteil (8) aufweist, in welchem eine Welle (12) befestigt ist, und mit einem im Kunststoffteil (8) durch Clipsen befestigten weichmagnetischen Rückschlußteil (9), auf dem der ringförmige Rotormagnet (11) befestigt ist, insbesondere durch Kleben.

13. Motor nach Anspruch 12, bei dem das Rückschlußteil (9) als Ringscheibe ausgebildet ist, deren innerer Rand in eine entsprechende radiale Ringnut (13) des Kunststoffteils (8) eingeclipst ist.

14. Motor nach Anspruch 12 oder 13, bei dem das als Träger dienende Kunststoffteil (8) als Spritzgußteil ausgebildet ist.

15. Elektronisch kommutierter Motor nach Anspruch 1, mit einem Gehäuse (50), das zwei napfförmige Gehäuseteile (51, 52) aufweist,
die sich in entgegengesetzten Richtungen öffnen
und mit ihren Bodenabschnitten (41, 42) unter Bildung eines zur Aufnahme einer Flachwicklung (4) ausgebildeten Spalts (2) einander gegenüberliegen.

16. Motor nach Anspruch 15 , bei dem die Gehäuseteile (51, 52) durch ein Lagertragrohr (22) miteinander verbunden sind.

17. Motor nach Anspruch 16, bei dem das Lagertragrohr (22) in seinem sich durch den Spalt (2) erstreckenden Abschnitt als Teil eines Spulenformers für die Flachwicklung (4) ausgebildet ist.

18. Motor nach einem der Ansprüche 15 bis 17, bei dem in das Lagertragrohr (22) Sinterlager (23) eingepreßt sind.

19. Motor nach Anspruch 18 , bei dem zwischen den eingepreßten Sinterlagern (23) ein Axiallager (24) vorgesehen ist , das sowohl in Richtung zum einen wie zum entgegengesetzten Sinterlager als Axiallager wirkt.

20. Motor nach einem oder mehreren der Ansprüche 15 bis 19, bei dem in dem zwischen den beiden Bodenabschnitten (41, 42) gebildeten Spalt (2) eine von der Kreisform abweichende Flachwicklung (4) angeordnet ist.

21. Motor nach Anspruch 20, bei dem die Flachwicklung (4) zweisträngig , und insbesondere bifilar, ausgebildet ist.

22. Elektronisch kommutierter Gleichstrommotor nach Anspruch 1,
mit einem Statorträger (3), der die Wicklung (4)
und eine im mittleren Bereich angeordnete Achse (34) enthält,
mit dem auf der einen Seite eines im wesentlichen axiallen Luftspalts ersten permanentmagnetischen Rotor (6),
und mit dem auf der gegenüberliegenden Seite des Luftspalts angeordneten zweiten permanentmagnetischen Rotor (7), der gleichachsig zum ersten Rotor (6) angeordnet ist und keine mechanische Verbindung zum ersten Rotor (6) aufweist.

23. Motor nach Anspruch 22, bei dem die beiden im wesentlichen identisch ausgebildeten Rotoren (6, 7) jeweils aus dem Magneten (11), der Rückschlußscheibe (9) und einer Lagerbuchse (33) bestehen, wobei der Magnet (11) und die Rückschlußscheibe (9) auf einem nabenartigen Ansatz (66) der Lagerbuchse (33) aufgeschoben sind.

24. Motor nach Anspruch 22 oder 23, bei dem die Lagerbohrungen in den beiden Lagerbuchsen (33) einen geringfügig größeren Durchmesser aufweisen als die Durchmesser der Achsendbereiche (36, 37) der Achse (34) und Kuppen (38, 39) am jeweiligen Ende der Achse (34) mittels der vorhandenen Magnetkraft gegen die Bodenflächen der Lagerbohrungen der Lagerbuchsen (33) gezogen werden.

25. Motor nach einem der Ansprüche 1 bis 5 , bei dem die radiale Lagerung der beiden Wellen (12) aus zwei Wälzlagern (73) besteht, die mit leichtem Schiebesitz in den axialen Endbereichen des Lagertragrohrs (72) eingebracht sind.

26. Motor nach Anspruch 25, bei dem zwischen den beiden Lagern (73) eine Abstandsbuchse (75) angeordnet ist, deren Innenbohrung größer ist als der Außendurchmesser der Wellen (12) und die Wellenenden durch einen Zwischenraum (80) voneinander getrennt sind.

27. Motor nach einem der Ansprüche 25 oder 26, bei dem die Rotormagnete (11) an Tragscheiben (78) befestigt sind und die Wellen (12) fest mit den Tragscheiben (78) verbunden sind.

28. Motor nach einem oder mehreren der Ansprüche 25 bis 27 , bei dem die Tragscheiben (78) aus magnetisch leitfähigem Blech ausgestanzt und die Zentralöffnung mit einem mittels Tiefziehen hergestellten Kragen (79) versehen ist.

## Claims

1. Electronically commutated direct current motor with an air gap (2), with a first permanent magnet rotor (6) which is disposed on one side of this air gap (2) and is associated with a first bearing arrangement (23, 24; 73), with a second permanent magnet rotor (7) which is disposed on the opposite side of the air gap (2) and is disposed on the same axis as the first rotor (6) but has no mechanical connection with the first rotor (6) and which is associated with a second bearing arrangement (23, 24; 73), and with a stator winding (4) which is disposed in the air gap (2) and is common to both rotors (6, 7) and serves to drive both rotors (6, 7), an axial preloading force being produced on the two bearing arrangements by the magnetic attraction between the permanent magnets of the two rotors (6, 7).

2. Motor according to claim 1, in which one of the two rotors (6, 7) is designed to drive a load.

3. Motor according to claim 2, in which the two rotors (6, 7) are designed essentially identical mechanically.

4. Motor according to one or more of claims 1 to 3, in which the permanent magnets (11) of the two rotors (6, 7) are essentially magnetised identically.

5. Motor according to one or more of the preceding claims, in which a housing (1, 50) is provided with a bearing supporting tube (22) in which in each case a radial bearing arrangement (23) is provided for radial support of the shafts (12) of the two rotors (6, 7).

6. Motor according to claim 5, in which an axial bearing element (24) is disposed between the radial bearing arrangements (23) and against which one rotor (6) bears with the free end of its shaft (12) from one side and the other rotor (7) bears with the free end of its shaft (12) from the other side, the rotors (6, 7) being drawn against this axial bearing element (24) by their mutual magnetic attraction.

7. Motor according to claim 5 or 6, in which the bearing supporting tube (22) is provided on a stator carrier (3) which extends through the air gap (2) of the motor and there forms two walls (25, 26) essentially parallel with the air gap (2) between which the stator winding (4) is disposed.

8. Motor according to claim 7, in which at least one stationary positioning magnet (15) is disposed between the walls (25, 26) essentially parallel with the air gap (2), which positioning magnet, in co-operation with the permanent magnets (11) of the two rotors (6, 7), influences the position of these two rotors in the currentless state.

9. Motor according to claim 8, in which the positioning magnet (15) is polarised in the axial direction.

10. Motor according to one or more of the preceding claims, in which a housing (1) is provided which exhibits a bearing supporting tube (22) for both rotors (6, 7) and outer walls (31, 32), of which one wall (31) surrounds the periphery of the first rotor (6) and the other wall (32) the periphery of the second rotor (7).

11. Motor according to claim 10, in which the wall (31) which surrounds the rotor (6) carrying a fan wheel (21) is designed to guide the air for this fan wheel (21) in the area of the fan wheel (21).

12. Electronically commutated direct current motor according to one or more of claims 1 to 11 with a flat stator winding (4) and with at least one permanent magnet rotor (6) which is associated with the latter and as carrier for the annular, axially magnetised rotor magnet (11) exhibits a plastic part (8) in which a shaft (12) is secured, and with a soft magnetic return part (9) which is secured in the plastic part (8) by clips and on which the annular rotor magnet (11) is secured, in particular by gluing.

13. Motor according to claim 12, in which the return part (9) is designed as an annular disc the inner edge of which is clipped into a corresponding radial annular groove (13) in the plastic part (8).

14. Motor according to claim 12 or 13, in which the plastic part (8) serving as carrier is designed as an injection moulding.

15. Electronically commutated motor according to claim 1, with a housing (50) which exhibits two cup-shaped housing parts (51, 52) which open in opposite directions and lie with their bottom portions (41, 42) opposite one another forming a gap (2) designed to accommodate a flat winding (4).

16. Motor according to claim 15, in which the housing parts (51, 52) are connected to one another by a bearing supporting tube (22).

17. Motor according to claim 16, in which the bearing supporting tube (22) in its portion extending through the gap (2) is designed as part of a coil former for the flat winding (4).

18. Motor according to one of claims 15 to 17, in which sintered bearings (23) are pressed into the bearing supporting tube (22).

19. Motor according to claim 18, in which an axial bearing (24) is provided between the press-fitted sinter bearings (23) and acts as an axial bearing in the direction of both one sintered bearing and the opposing sintered bearing.

20. Motor according to one or more of claims 15 to 19, in which a flat winding (4) of other than circular shape is disposed in the gap (2) formed between the two bottom portions (41, 42).

21. Motor according to claim 20, in which the flat winding (4) is designed with two phase windings and in particular bifilar.

22. Electronically commutated direct current motor according to claim 1, with a stator carrier (3) which contains the winding (4) and a shaft (34) disposed in the middle area, with the first permanent magnet rotor (6) on one side of an essentially axial air gap, and with the second permanent magnet rotor (7) disposed on the opposite side of the air gap being disposed on the same axis as the first rotor (6) and having no mechanical connection with the first rotor (6).

23. Motor according to claim 22, in which the two essentially identically designed rotors (6, 7) each consist of the magnet (11), the return disc (9) and a bearing bush (33), the magnet (11) and the return disc (9) being slipped on to a hub-like shoulder (66) of the bearing bush (33).

24. Motor according to claim 22 or 23, in which the bearing bores in the two bearing bushes (33) exhibit a slightly greater diameter than the diameters of the shaft end areas (36, 37) of the shaft (34), and cups (38, 39) at each end of the shaft (34) are drawn against the bottom surfaces of the bearing bores of the bearing bushes (33) by means of the existing magnetic force.

25. Motor according to one of claims 1 to 5, in which the radial mountings of the two shafts (12) consist of two roller bearings (73) which are introduced into the axial end areas of the bearing supporting tube (72) with a slight sliding fit.

26. Motor according to claim 25, in which a spacing bush (75) is disposed between the two bearings (73) and the inside bore of which is greater than the outside diameter of the shafts (12) and the shaft ends are separated from one another by an interspace (80).

27. Motor according to one of claims 25 or 26, in which the rotor magnets (11) are secured to supporting discs (78) and the shafts (12) are firmly connected with the supporting discs (78).

28. Motor according to one or more of claims 25 to 27, in which the supporting discs (78) are stamped from magnetically conducting sheet metal and the central opening is provided with a collar (79) produced by means of deep drawing.

## Revendications

1. Moteur à courant continu à commutation électronique comprenant une fente d'aération (2), un premier rotor à aimantation permanente (6) placé d'un côté de cette fente d'aération (2), auquel est associé une première série de paliers (23, 24 ; 73), comprenant également un second rotor à aimantation permanente (7) placé sur le côté opposé de la fente d'aération (2), qui est placé sur le même axe que le premier rotor (6), mais qui ne présente pas de lien mécanique avec le premier rotor (6), et auquel est associée une seconde série de paliers (23, 24 ; 73), ainsi qu'un bobinage de stator (4) placé dans la fente d'aération (2), qui est commun aux deux rotors (6, 7) et qui sert à entraîner les deux rotors (6, 7), sachant que l'attraction magnétique entre les aimants permanents des deux rotors (6, 7) produit une précontrainte axiale sur les deux séries de paliers.

2. Moteur selon la revendication 1, dans lequel l'un des deux rotors (6, 7) est conçu pour entraîner une charge.

3. Moteur selon la revendication 2, dans lequel d'un point de vue mécanique, les deux rotors (6, 7) sont pour l'essentiel réalisés de manière identique.

4. Moteur selon l'une ou plusieurs des revendications 1 à 3, dans lequel les aimants permanents (11) des deux rotors (6, 7) sont essentiellement aimantés de manière identique.

5. Moteur selon l'une ou plusieurs des revendications précédentes, dans lequel est prévu un carter (1, 50) avec un tube support de palier (22) dans lequel est prévu un palier radial (23) pour le montage radial de l'arbre (12) de chacun des deux rotors (6, 7).

6. Moteur selon la revendication 5, dans lequel un élément de palier axial (24) est disposé entre les paliers radiaux (23), contre lequel le premier rotor (6) est appliqué par un côté avec l'extrémité libre de son arbre (12) et l'autre rotor (7) est appliqué par l'autre côté avec l'extrémité libre de son arbre (12), sachant que les rotors (6, 7) sont tirés vers cet élément de palier axial (24) par leur attraction mutuelle.

7. Moteur selon la revendication 5 ou 6, dans lequel le tube support de palier (22) est prévu sur un support de stator (3) qui passe à travers la fente d'aération (2) du moteur et forme à cet endroit deux parois (25, 26) essentiellement parallèles à la fente d'aération (2), entre lesquelles est disposé le bobinage de stator (4).

8. Moteur selon la revendication 7, dans lequel au moins un aimant de positionnement fixe (15) est disposé entre les parois (25, 26) essentiellement parallèles à la fente d'aération (2), lequel, en coopérant avec les aimants permanents (11) des deux rotors (6, 7), influence la position de ces deux rotors en l'absence de courant.

9. Moteur selon la revendication 8, dans lequel l'aimant de positionnement (15) est polarisé dans la direction axiale.

10. Moteur selon l'une ou plusieurs des revendications précédentes, dans lequel un carter (1) est prévu, qui présente un tube support de palier (22) pour les deux rotors (6, 7) et des parois extérieures (31, 32) dont l'une (31) entoure la périphérie du premier rotor (6) et l'autre (32) la périphérie du second rotor (7).

11. Moteur selon la revendication 10, dans lequel la paroi (31) qui entoure le rotor (6) portant une hélice de ventilateur (21) est réalisée, au voisinage de l'hélice (21), de manière à guider l'air pour cette hélice (21).

12. Moteur à courant continu à commutation électronique selon l'une ou plusieurs des revendications 1 à 11, comprenant un stator plat (4) et au moins un rotor (6) à magnétisme permanent associé à ce dernier, qui présente en tant que support pour l'aimant du rotor annulaire (11) à magnétisme axial une pièce en matière plastique (8) dans laquelle est fixé un arbre (12), et comprenant également une pièce de court-circuit ou de rebouclage magnétique doux (9) fixé par enclenchement dans la pièce en matière plastique (8), sur lequel est fixé, notamment collé, l'aimant du rotor annulaire (11).

13. Moteur selon la revendication 12, dans lequel la pièce formant court-circuit ou rebouclage magnétique (9) est réalisée en tant que rondelle dont le bord intérieur est enclenché dans une rainure annulaire radiale (13) correspondante de la pièce en matière plastique (8).

14. Moteur selon la revendication 12 ou 13, dans lequel la pièce en matière plastique (8) servant de support est réalisée en tant que pièce moulée par injection.

15. Moteur à commutation électronique selon la revendication 1, comprenant un carter (50) présentant deux parties en forme de cuvette (51, 52) qui s'ouvrent à l'opposé l'une de l'autre et dont les fonds (41, 42) sont opposés l'un à l'autre en formant une fente (2) destinée à recevoir un bobinage plat (4).

16. Moteur selon la revendication 15, dans lequel les parties de carter (51, 52) sont reliées entre elles par un tube support de palier (22).

17. Moteur selon la revendication 16, dans lequel la partie du tube support de palier (22) qui traverse la fente (2) est réalisée en tant qu'élément pour former le bobinage plat (4).

18. Moteur selon l'une des revendications 15 à 17, dans lequel des coussinets frittés sont enfoncés dans le tube support de palier (22).

19. Moteur selon la revendication 18, dans lequel un palier axial (24) est prévu entre les coussinets frittés enfoncés (23), qui fait fonction de palier axial aussi bien vers un coussinet fritté que vers le coussinet fritté opposé.

20. Moteur selon l'une ou plusieurs des revendications 15 à 19, dans lequel un bobinage plat (4) non circulaire est disposé dans la fente (2) formée entre les deux fonds (41, 42).

21. Moteur selon la revendication 20, dans lequel le bobinage plat (4) est réalisé à double brin, notamment de façon bifilaire.

22. Moteur à courant continu à commutation électronique selon la revendication 1, comprenant un support de stator (3) contenant le bobinage (4) et un axe (34) situé dans la partie centrale, comprenant également le premier rotor à aimantation permanente (6) situé d'un côté d'une fente d'aération essentiellement axiale, ainsi que le second rotor à aimantation permanente (7) situé de l'autre côté de la fente d'aération, ce dernier étant placé sur le même axe que le premier rotor (6) et ne présentant aucun lien mécanique avec le premier rotor (6).

23. Moteur selon la revendication 22, dans lequel les deux rotors (6, 7) pour l'essentiel identiques sont chacun composés de l'aimant (11), du court-circuit magnétique (9) et d'un coussinet (33), sachant que l'aimant (11) et le court-circuit magnétique (9) sont enfilés sur une saillie (66) semblable à un moyeu du coussinet (33).

24. Moteur selon la revendication 22 ou 23, dans lequel les alésages dans les deux coussinets (33) ont un diamètre légèrement supérieur au diamètre des zones d'extrémité (36, 37) de l'arbre (34), et dans lequel des calottes (38, 39) à chaque extrémité de l'arbre (34) sont tirées par la force magnétique vers les surfaces du fond des alésages des coussinets (33).

25. Moteur selon l'une des revendications 1 à 5, dans lequel le palier radial des deux arbres (12) est composé de deux paliers à roulement (73) qui sont logés avec un léger ajustement appuyé dans les zones d'extrémité axiales du tube support de palier (72).

26. Moteur selon la revendication 25, dans lequel un coussinet d'écartement (75) dont l'alésage est supérieur au diamètre extérieur des arbres (12) est placé entre les deux paliers (73), et dans lequel les extrémités des arbres sont séparées l'une de l'autre par un intervalle (80).

27. Moteur selon la revendication 25 ou 26, dans lequel les aimants (11) du rotor sont fixés sur des disques supports (78), et les arbres (12) sont reliés fixement aux disques supports (78).

28. Moteur selon l'une ou plusieurs des revendications 25 à 27, dans lequel les disques supports (78) sont découpés à la matrice dans de la tôle magnétiquement conductrice, et l'ouverture centrale est munie d'une collerette (79) réalisée par emboutissage.
